# EUROPEAN PATENT APPLICATION

(11) **EP 4 668 417 A1**
(43) Date of publication of application: **24.12.2025**
(21) Application number: 24756977.5
(22) Date of filing: 15.02.2024
(51) Int. Cl.: H01M 10/653, H01M 10/613, H01M 10/625, H01M 10/654, H01M 10/658, H01M 10/659

(54) **HEAT ABSORBING BODY AND SECONDARY BATTERY MODULE COMPRISING SAID HEAT ABSORBING BODY**

(30) Priority: 16.02.2023 JP 2023022947
(71) Applicant: DIC Corporation, Tokyo 174-8520 (JP)
(72) Inventor: TOYOMURA, Kyouichi, Tokyo 103-8233 (JP); FUJISAKI, Kenichi, adachi-gun, Saitama 362-8577 (JP); TAKEHISA, Toru, Sakura-shi, Chiba 285-8668 (JP); MATSUMOTO, Takashi, Takaishi-shi, Osaka 592-0001 (JP)
(74) Representative: Schön, Christoph
(86) International application number: PCT/JP2024/005380
(87) International publication number: WO 2024/172137

(57) **Abstract**

The present disclosure is aimed to provide a heat absorber with a low heat absorption starting temperature and excellent heat absorption amount, flame retardancy, and cushioning properties, and a secondary battery module including the heat absorber. The present disclosure provides a heat absorber including a bag capable of being filled with content and a hydrogel to fill the bag as the content, in which the hydrogel has a three-dimensional network structure and is synthesized using a water-soluble organic monomer as a reaction material. The heat absorber in the present disclosure is useful, in particular, as a heat absorber for secondary batteries.

## Description

### Technical Field

The present invention relates to a heat absorber and a secondary battery module including the heat absorber.

### Background Art

Secondary batteries, which can control the time difference between storage and demand, are used in various applications including automobiles or mobile devices, and their importance is further increasing because they are needed to build a low-carbon society or to expand the introduction of renewable energy from the perspective of energy security.

However, when the temperature of the secondary battery such as a lithium-ion battery rises due to heat generation during high-speed charging or high-output discharging, there is a risk of damage to the battery due to thermal runaway. In the future, as ultra-fast charging speed continues to increase, the amount of heat generated is expected to increase even higher, and there is a need to develop methods of suppressing a temperature rise for enhancing the safety of the battery. As for the secondary battery, internal short circuits or the like sometimes also cause thermal runaway, resulting in problems such as ignition or smoking.

Therefore, in order to minimize the damage caused by such failures, there is a need for technology to prevent or delay explosion to other battery cells by absorbing and extinguishing heat from the battery that has reached an abnormally high temperature.

For example, a technology that suppresses ignition of batteries and provides excellent fire resistance is described in PTL 1. PTL 1 discloses a technology in which a battery exterior film with a refractory resin layer containing a hydrated metal compound such as aluminum hydroxide and magnesium hydroxide as a heat-absorbing agent is used as an exterior material of a battery. A technology that can extinguish a fire in a short time against ignition caused by a sudden rise in battery temperature is described in PTL 2. PTL 2 discloses a technology related to a refractory resin composition or a sheet thereof containing a thermoplastic or elastomer resin, a metal hydroxide such as aluminum hydroxide or magnesium hydroxide, and a thermally conductive filler.

### Citation List

### Patent Literature

PTL 1: Japanese Unexamined Patent Application Publication No. 2021-2425
PTL 2: Japanese Unexamined Patent Application Publication No. 2020-132843

### Summary of Invention

### Technical Problem

However, both of the technologies in PTLs 1 and 2 are such that a battery exterior laminated film itself absorbs heat, so the amount of heat-absorbing material contained is limited due to restrictions of film thickness or flexibility, and a sufficient heat absorption effect is not achieved. In addition, the resin molding temperature used in PTL 2 generally requires 150°C or higher. If calcium sulfate dihydrate is included as a heat-absorbing material, molding is difficult because an endothermic reaction occurs from 120°C which is the heat absorption starting temperature of the calcium sulfate dihydrate. For this reason, in the technology of PTL 2, molding is performed at 80°C, but there is another problem in that the battery exterior film does not have enough strength to be used alone. Furthermore, the technologies in PTLs 1 and 2 do not consider temperature control before thermal runaway, battery cell expansion, and flame shielding properties.

An object of the present disclosure is to provide a heat absorber with a low heat absorption starting temperature and excellent heat absorption amount, flame retardancy, and cushioning properties, and a secondary battery module including the heat absorber.

### Solution to Problem

The inventors of the present invention have found that a heat absorber containing a bag and a hydrogel exhibits a low heat absorption starting temperature and is excellent in heat absorption amount, flame retardancy, and cushioning properties. This finding has led to completion of the present invention as follows.
[1] A heat absorber including a bag capable of being filled with content and a hydrogel to fill the bag as the content.
[2] The heat absorber according to [1], wherein a sheet that forms the bag has a water vapor transmission rate ([g/(m²·24h)]) of 50 g/(m²·24h) or less.
[3] The heat absorber according to [1] or [2], wherein the hydrogel is an organic-inorganic composite hydrogel.
[4] The heat absorber according to any one of [1] to [3], wherein the hydrogel is made from at least a water-soluble organic monomer and a water-swellable clay mineral as reaction materials.
[5] The heat absorber according to any one of [1] to [4], further containing a low-volatile solvent as the content.
[6] The heat absorber according to any one of [1] to [5], wherein the heat absorber is used for a battery.
[7] The heat absorber according to [6], wherein the battery is a secondary battery.
[8] A secondary battery module including the heat absorber according to any one of [1] to [7].
[9] The secondary battery module according to [8], wherein the heat absorber according to any one of [1] to [7] is sandwiched between battery cells.
[10] The secondary battery module according to [8] or [9], wherein the heat absorber according to any one of [1] to [7] has a total thickness in a range of 100 to 50000 µm. Advantageous Effects of Invention

The heat absorber in the present disclosure has a low heat absorption starting temperature and is excellent in heat absorption amount, flame retardancy, and cushioning properties.

The present disclosure can provide a secondary battery module with high safety because it includes a heat absorber with a low heat absorption starting temperature and excellent heat absorption amount, flame retardancy, and cushioning properties.

### Brief Description of Drawings

FIG. 1 is a diagram illustrating an example of a secondary battery module in which a heat absorber in the present embodiment can be installed.
FIG. 2 is a perspective view schematically illustrating a disassembled state of the secondary battery module in FIG. 1.
FIG. 3 is a chart illustrating a DSC measurement result showing the heat absorption starting temperature and the heat absorption amount of a heat absorber in Example 1.
FIG. 4 is a chart illustrating a DSC measurement result showing the heat absorption starting temperature and the heat absorption amount of a heat absorber in Example 2. Description of Embodiments

Embodiments of the present invention (hereinafter referred to as "the present embodiment") will be described below. However, the present disclosure is not limited to the following description and can be implemented with various modifications within the scope of the present disclosure.

### [Definitions]

In the present description, "reaction material" refers to a compound that is used to obtain a target compound through a chemical reaction such as combination or decomposition and that partially constitutes the chemical structure of the target compound, excluding substances such as a solvent, a catalyst, and a polymerization initiator that serve as auxiliaries in the chemical reaction.

In the present description, "structural unit" refers to a (repeating) unit of a chemical structure formed during reaction or polymerization, or in other words, refers to a partial structure other than structures of chemical bonds involved in the reaction or polymerization in a product compound formed from the reaction or polymerization, or what is called a residue.

In the present description, "hydrogel" refers to a three-dimensional network of a polymer containing an aqueous solvent such as water. Examples include jelly, diaper absorbent, konjac, and agar. The polymer in the form of a three-dimensional network that is the backbone of the hydrogel is called the hydrogel body, and the hydrogel body has the aqueous solvent inside. Thus, the hydrogel has a hydrogel body and an aqueous solvent.

### [Heat Absorber]

The heat absorber in the present disclosure (which hereinafter may be simply referred to as "heat absorber") is a heat absorber including a bag and a hydrogel that fills the bag.

The hydrogel is not particularly limited, and any known hydrogel can be used. For example, those in which an aqueous solvent is retained in a three-dimensional network structure (three-dimensional network) composed mainly of a polymer synthesized from a water-soluble organic monomer or the like are preferred. Those in which an aqueous solvent is retained in a three-dimensional network structure (three-dimensional network) composed mainly of a polymer synthesized from a water-soluble organic monomer in the presence of a water-swellable clay mineral are more preferred.

If the content of the aqueous solvent in the hydrogel is in the range of 5 to 99% by mass of the total hydrogel, the hydrogel can exhibit a heat absorption effect to a level that can effectively prevent ignition or damage of a secondary battery due to thermal runaway, and is suitable as a heat absorber, in particular, as a heat absorber for batteries, especially a heat absorber for secondary batteries. The upper limit of the content of the aqueous solvent in the hydrogel is preferably 99% by mass or less of the total gel, more preferably 90% by mass or less, and even more preferably 80% by mass or less. The lower limit of the content of the aqueous solvent is preferably 5% by mass or more, and even more preferably 10% by mass or more, and 20% by mass or more. The preferred range of the content of the aqueous solvent can be a combination of the above upper and lower limits as appropriate.

As a specific example of such a hydrogel, an organic-inorganic composite hydrogel (NC gel), an interpenetrating polymer network hydrogel (DN gel), a slide-ring gel (SR gel), or a hydrogel called aquamaterial can be used. Among these, the organic-inorganic composite hydrogel (also called organic-inorganic hydrogel or NC gel (nanocomposite gel)) is preferred because it has excellent heat absorption performance because of the aqueous solvent contained inside and has excellent cushioning properties and creep resistance.

The content of the hydrogel in the present embodiment is preferably 100% by mass or less, more preferably 90% by mass or less, and preferably 20% by mass or more, more preferably 25% by mass or more, of the total heat absorber (the total amount of the content of the bag). The preferred range of the content of the hydrogel in the content can be a combination of the above upper and lower limits as appropriate (for example, the preferred range of the content can be 20% by mass to 100% by mass, or 25% by mass to 90% by mass).

Thus, a heat absorber with a low heat absorption starting temperature and excellent flame retardancy, heat absorption amount, and cushioning properties can be provided. As a result, a secondary battery module with high safety can be provided which includes the heat absorber to exhibit its heat absorption properties and thereby suppresses the temperature effect on other battery cells. The heat absorber in the present disclosure has a strength enough to be used alone as a heat absorber. If necessary, one or two or more selected from the group consisting of low-volatile solvents and additives may be further filled in the bag.

The heat absorption starting temperature of the heat absorber in the present embodiment is preferably 160°C or lower, more preferably 150°C or lower, even more preferably 120°C or lower, more preferably 110°C or lower, and even more preferably 100°C or lower. The lower limit of the heat absorption starting temperature is not particularly limited, but is preferably 70°C or higher, more preferably 80°C or higher, and even more preferably 90°C or higher. The preferred range of the heat absorption starting temperature can be a combination of the above upper and lower limits as appropriate (for example, the preferred range of the heat absorption starting temperature can be 70°C or higher and 160°C or lower, 70°C or higher and 150°C or lower, 80°C or higher and 120°C or lower, or 90°C or higher and 100°C or lower).

In the present description, the heat absorption starting temperature (°C) is the temperature at the intersection of a straight line extending a low temperature-side baseline to the high temperature side and a tangent line drawn at the point of maximum gradient on a curve at the low temperature side of the endothermic peak due to evaporation, in a DSC measurement curve which is the measurement result by a differential scanning calorimetry analyzer (DSC). However, if multiple endothermic peaks are observed, the intersection of a straight line extending a low temperature-side baseline to the high temperature side and a tangent line drawn at the point of maximum gradient on a curve at the low temperature side of each endothermic peak is calculated for each of the multiple endothermic peaks, and the lowest temperature among the temperatures at a plurality of intersections is adopted as the heat absorption starting temperature.

The endothermic peak temperature of the heat absorber in the present embodiment is preferably in the range of at least 80°C to 160°C, and more preferably in the range of 90°C to 150°C.

In the present description, the endothermic peak temperature refers to the temperature (°C) at the maximum value of the endothermic peak due to evaporation in the DSC measurement curve which is the measurement result by a differential scanning calorimetry analyzer (DSC). If multiple endothermic peaks are observed, at least one of the multiple endothermic peaks is in the range of 80°C to 160°C.

The heat absorption amount of the heat absorber in the present embodiment is not particularly limited, but is in the range from preferably 100 J/g or more, more preferably 200 J/g or more, even more preferably 300 J/g or more, even more preferably 500 J/g or more, to preferably 3000 J/g or less, more preferably 2500 J/g or less, even more preferably 2000 J/g or less, at the endothermic peak temperature (in the range of 80°C to 160°C). The preferred range of the heat absorption amount can be a combination of the above upper and lower limits as appropriate (for example, the preferred range of the heat absorption amount is 100 J/g to 3000 J/g, 200 J/g to 2500 J/g, 300 J/g to 2000 J/g, or 500 J/g to 2000 J/g).

Note that the heat absorption starting temperature, the endothermic peak temperature, and the heat absorption amount of the heat absorber in the present embodiment are values obtained by the method in Examples described below using a differential scanning calorimetry analyzer (DSC).

The shape or size of the heat absorber in the present embodiment is not particularly limited, and may be, for example, an approximately spherical shape, an approximately flat plate shape, or an irregular shape, which is selected as appropriate according to the size of the secondary battery to be used. For example, it is preferable if the heat absorber has an approximately flat plate shape because it is easy to install between adjacent battery cells.

When the heat absorber in the present embodiment has an approximately flat plate shape, the average thickness of the heat absorber is, for example, but not limited to, in the range of 100 µm to 50000 µm. The lower limit of the average thickness is preferably 100 µm or more, more preferably 200 µm or more, even more preferably 500 µm or more, and particularly preferably 1000 µm or more. The upper limit of the average thickness is preferably 50000 µm or less, more preferably 20000 µm or less, even more preferably 10000 µm or less, and particularly preferably 8000 µm or less. The preferred range of the average thickness can be a combination of the above upper and lower limits as appropriate (for example, the preferred range of the average thickness can be 200 µm to 20000 µm, 500 µm to 10000 µm, or 1000 µm to 8000 µm). In the following, the constituents of the heat absorber in the present embodiment, namely, the essential components including the bag and the hydrogel (including the aqueous solvent contained in the hydrogel), and the optional components such as a low-volatile solvent and additives that are blended as necessary will be described.

### (Bag)

The bag in the present embodiment is not particularly limited as long as the content including the hydrogel or the aqueous solvent does not leak outside. For example, the bag is preferably a three-sided bag having an opening at its upper end and a body closed at its lower end, and having a structure heat-sealed so that the opening is closed after the contents including the hydrogel and the aqueous solvent are stored.

The three-sided bag has a structure in which two sheets are laminated on three sides, that is, a lower end portion and side surface portions, and sealed after being filled with the contents through the opening. The three-sided bag therefore has excellent air-tightness and is easy to insert between battery cells because of its approximately flat plate shape.

The bag in the present embodiment is preferably formed of a sheet. As a preferred form of the bag in the present embodiment, depending on the purpose of use or the like, two sheets of films of a desired size and shape (for example, rectangular or (approximately) circular) are superimposed on each other, and predetermined heat-seal regions (e.g., the edges of the films) are subjected to thermocompression bonding so as to form an opening, whereby the heat-seal regions are bonded together. In this way, an interior space region that can be filled with content can be formed, and a three-sided bag having an opening through which the content is filled into the interior space region and having two sheets bonded at the heat-seal regions can be produced. After the content is filled, the content can be sealed by heat-sealing the opening by compression bonding.

In the present description, "sealed" refers to a state in which the inside of the bag is substantially shut off from the outside. For example, permeation of a small amount of water vapor or other gases is allowed as long as the content does not leak outside.

The sheet used in the bag in the present embodiment is not particularly limited as long as it exhibits water shielding properties. Examples of the sheet include a known resin film, a resin film with a metal layer, or a film with a metal layer.

The average thickness of the sheet used in the bag in the present embodiment is not particularly limited, but is preferably, for example, 30 µm to 200 µm, and more preferably 60 µm to 150 µm. An exemplary material of the resin film is one or two or more resins such as polyester resin, nylon resin, polycarbonate resin, polypropylene resin, polyethylene resin, cyclic polyolefin resin, polystyrene resin, fluorine resin, or elastomer. These plastics can be used in the form of film, sheet, tube, or the like for the bag.

As the resin film with a metal layer, a metal such as aluminum or a metal oxide such as silica or alumina may be laminated in the form of metal foil, vapor-deposited film, or the like on the resin film. The use of the resin film with a metal layer can lower the water vapor transmission rate of the resin film. The water vapor transmission rate of the sheet can be adjusted by selection, thickness, and combination of materials. Examples of the lamination method include dry lamination, extrusion lamination, thermal lamination, co-extrusion, multilayer blow molding, laminated injection molding, or coating. A preferred form of the resin film with a metal layer is an aluminum laminate film (a film in which aluminum foil (including an aluminum vapor-deposited layer) and a thermoplastic resin film (for example, polyethylene film, PP film, PET film) laminated on at least one side of the aluminum foil are integrated).

In the present embodiment, an adhesive layer may be formed on the heat-seal regions and the opening to be closed for the purpose of sealing. For example, a laminate adhesive such as polyester adhesive, polyether adhesive, or polyurethane adhesive can be suitably used as the adhesive layer. Furthermore, the form of the adhesive is not particularly limited and, for example, any of solvent-type, solvent free-type, or aqueous-type adhesive can be used. For example, in the present invention, a bag made of a resin film with an aluminum vapor-deposited layer on the outside and sealed through a polyurethane laminate adhesive layer can be suitably used. Examples include the AB series of gas barrier aluminum bags (manufactured by MITSUBISHI GAS CHEMICAL COMPANY, INC.) and LAMIZIP AL type (SEISAN NIPPONSHA, Ltd.).

The higher the melting temperature (for example, 120 to 140°C) of the adhesive that closes the opening of the bag in the present embodiment or is provided in the heat-seal regions, the higher the strength and the tendency to withstand internal pressure.

The water vapor transmission rate ([g/(m²·24h)]) of the sheet that forms the bag in the present embodiment is preferably 50 g/(m²·24h) or less, more preferably 10 g/(m²·24h) or less, and even more preferably 5 g/(m²·24h) or less.

It is preferable if the water vapor transmission rate of the sheet that forms the bag is within the range of 50 g/(m²·24h) or less, because moisture inside the bag can be prevented from leaking to the outside and decrease in heat absorption performance over time can be prevented.

The lower limit of the water vapor transmission rate ([g/(m²·24h)]) is not particularly limited, but is preferably 0 g/(m²·24h) or more, and more preferably more than 0 g/(m²·24h). The preferred range of the water vapor transmission rate can be a combination of the above upper and lower limits as appropriate (the preferred range of the water vapor transmission rate can be, for example, 0 g/(m²·24h) or more and 50 g/(m²·24h) or less, or 0 g/(m²·24h) or more and 10 g/(m²·24h) or less. From another viewpoint, the preferred range of the water vapor transmission rate may be more than 0 g/(m²·24h) and 50 g/(m²·24h) or less.).

In the present description, the water vapor transmission rate ([g/(m².24h)]) is measured in accordance with JIS K7129 under an environment at a temperature of 40°C and a relative humidity of 90%.

### (Hydrogel)

The hydrogel in the present embodiment preferably has an aqueous solvent and a three-dimensional network structure of a polymer that retains the aqueous solvent inside. The hydrogel has an aqueous solvent and a hydrogel body which is a three-dimensional network structure of a polymer containing a water-swellable clay mineral and a water-soluble organic monomer structural unit that are at least partially dissolved or dispersed in the aqueous solvent.

Examples of the hydrogel include an interpenetrating polymer network gel in which two acrylic polymers each individually form a three-dimensional network structure, a slide-ring gel in which cyclodextrin is the backbone of a three-dimensional network structure, and an aquamaterial in which a hyperbranched dendrimer forms the main backbone of a three-dimensional network structure to which a water-swellable clay mineral is added. In the present disclosure, the following description is based on an organic-inorganic composite hydrogel as one aspect of the present embodiment. The organic-inorganic composite hydrogel in the present embodiment has a three-dimensional network structure, as a hydrogel body, including a water-soluble organic monomer structural unit and a water-swellable clay mineral. More specifically, the hydrogel body of the organic-inorganic composite hydrogel (which hereinafter may be referred to as the organic-inorganic composite hydrogel body) can be considered as a polymer gel (= three-dimensional network structure) in which a plurality of polymer chains constituted of the water-soluble organic monomer structural unit are crosslinked via a water-swellable clay mineral that functions as a binding point. The organic-inorganic composite hydrogel can swell by incorporating an aqueous solvent such as water into the three-dimensional network structure of the polymer gel. As a result, the swollen organic-inorganic composite hydrogel has heat absorption performance and can exhibit not only excellent cushioning properties that conform to relatively short-term deformation such as expansion and contraction of a battery cell due to charging and discharging, but also excellent creep resistance that can relieve internal pressure caused by expansion of a battery cell over time.

It is preferable that the organic-inorganic composite hydrogel has a three-dimensional network structure and is made from a water-soluble organic monomer and a water-swellable clay mineral as reaction materials.

The organic-inorganic composite hydrogel according to one aspect of the present embodiment is made from at least a water-soluble organic monomer structural unit and a water-swellable clay mineral as reaction materials. A preferred method of producing the organic-inorganic composite hydrogel according to one aspect of the present embodiment is to polymerize a water-soluble organic monomer in a dispersion liquid (a) containing the water-soluble organic monomer, a water-swellable clay mineral, an aqueous solvent, and, if necessary, a polymerization initiator and an additive, because this method is a simple and convenient method to obtain an organic-inorganic composite hydrogel with a three-dimensional network structure. The resulting polymer of the water-soluble organic monomer forms a three-dimensional network structure together with the water-swellable clay mineral and serves as a constituent of the organic-inorganic composite hydrogel.

The lower limit of the content of the hydrogel body in the present embodiment can be preferably 1% by mass or more and more preferably 10% by mass or more of the total amount of hydrogel. On the other hand, the upper limit of the content of the hydrogel body can be preferably 50% by mass or less and more preferably 40% by mass or less. The preferred range of the content of the hydrogel body can be a combination of the above upper and lower limits as appropriate (for example, the preferred range of the content can be 1% by mass to 50% by mass or 10% by mass to 40% by mass). For example, when the hydrogel body is constituted of the water-soluble organic monomer structural unit as described below, the content of the hydrogel body can be the total amount of the water-soluble organic monomer structural unit and the water-swellable clay mineral.

The content of the hydrogel body is calculated as the mass change (%) before and after drying the hydrogel at 120°C for 2 hours.

### <Water-Soluble Organic Monomer>

The water-soluble organic monomer used in the present embodiment constitutes the organic-inorganic composite hydrogel body as the water-soluble organic monomer structural unit. The lower limit of the content of the water-soluble organic monomer structural unit in the hydrogel in the present embodiment can be preferably 0.9% by mass or more, more preferably 1% by mass or more, and even more preferably 5% by mass or more of the total amount of hydrogel. On the other hand, the upper limit of the content of the water-soluble organic monomer structural unit can be 50% by mass or less, 40% by mass or less, or 30% by mass or less. The preferred range of the content of the water-soluble organic monomer structural unit in the hydrogel can be a combination of the above upper and lower limits as appropriate (for example, the preferred range of the content can be 0.9% by mass to 50% by mass, 1% by mass to 40% by mass, or 5% by mass to 30% by mass).

The type of the water-soluble organic monomer used in the present embodiment is not particularly limited and examples include a monomer having a (meth)acrylamide group, a monomer having a (meth)acryloyloxy group, and an acrylic monomer having a hydroxyl group.

In the present description, "(meth)acrylamide" means one or both of acrylamide and methacrylamide, "(meth)acryloyloxy" means one or both of acryloyloxy and (meth)acryloyloxy, "(meth)acrylate" means one or both of acrylate and methacrylate, and "(meth)acrylic monomer" means one or both of acrylic monomer and methacrylic monomer.

Examples of the monomer having a (meth)acrylamide group include acrylamide, N,N-dimethylacrylamide, N,N-diethylacrylamide, N-methylacrylamide, N-ethylacrylamide, N-isopropylacrylamide, N-cyclopropylacrylamide, N,N-dimethylaminopropylacrylamide, N,N-diethylaminopropylacrylamide, acryloylmorpholine, methacrylamide, N,N-dimethylmethacrylamide, N,N-diethylmethacrylamide, N-methylmethacrylamide, N-ethylmethacrylamide, N-isopropylmethacrylamide, N-cyclopropylmethacrylamide, N,N-dimethylaminopropyl methacrylamide, and N,N-diethylaminopropyl methacrylamide.

Preferred examples of the monomer having a (meth)acrylamide group include acrylamide, N,N-dimethylacrylamide, N-methylacrylamide, N-ethylacrylamide, acryloylmorpholine, methacrylamide, N,N-dimethylmethacrylamide, N-methylmethacrylamide, and N-ethylmethacrylamide.

Examples of the monomer having a (meth)acryloyloxy group include methoxyethyl acrylate, ethoxyethyl acrylate, methoxyethyl methacrylate, ethoxyethyl methacrylate, methoxymethyl acrylate, and ethoxymethyl acrylate.

Examples of the acrylic monomer having a hydroxyl group include hydroxyethyl acrylate and hydroxyethyl methacrylate. As the water-soluble organic monomer used in the present embodiment, the acrylic monomer having a hydroxyl group may be used alone or two or more types may be used.

In the present embodiment, when a homopolymer is obtained from the water-soluble organic monomer, the obtained homopolymer preferably has a lower critical solution temperature (°C) of 50°C or higher, more preferably 60°C or higher, and preferably has no lower critical solution temperature (°C), that is, no lower critical solution temperature (°C) can be observed in the aqueous solvent.

Thus, the polymer chain having the water-soluble organic monomer structural unit to constitute the organic-inorganic composite hydrogel does not undergo a phase transition at temperatures below 50°C, so that both more excellent cushioning properties and heat absorption ability can be achieved even at higher temperatures.

More specifically, the organic-inorganic composite hydrogel according to one aspect of the present embodiment has, as a constituent, a polymer chain constituted of a water-soluble organic monomer structural unit obtained by polymerization or reaction of a water-soluble organic monomer. Therefore, at temperatures above the lower critical solution temperature (°C) of the polymer chain constituted of the water-soluble organic monomer structural unit, the polymer chain undergoes a phase transition due to desolvation and separates into a phase containing the polymer chain and a phase containing the aqueous solvent. As a result, the three-dimensional network structure of the organic-inorganic composite hydrogel containing the aqueous solvent cannot be maintained, making it difficult to provide cushioning properties.

Therefore, the lower critical solution temperature (°C) of the organic-inorganic composite hydrogel in the aqueous solvent is preferably 50°C or higher, more preferably 60°C or higher, and preferably has no lower critical solution temperature (°C), that is, no lower critical solution temperature (°C) can be observed in the aqueous solvent.

From the viewpoint of suppressing the phase transition of the organic-inorganic composite hydrogel, the preferred water-soluble organic monomer used in the present embodiment is preferably a water-soluble organic monomer having a repeating unit in a homopolymer having no lower critical solution temperature in the aqueous solvent. Specifically, (meth)acrylamide, N,N-dimethyl(meth)acrylamide, acryloylmorpholine, methoxyethyl acrylate, ethoxyethyl acrylate, methoxyethyl methacrylate, ethoxyethyl methacrylate, methoxymethyl acrylate, ethoxymethyl acrylate, hydroxyethyl acrylate, or hydroxyethyl methacrylate is preferred.

When the organic-inorganic composite hydrogel is heated above the lower critical solution temperature (°C) of the organic-inorganic composite hydrogel or the polymer chain constituting the organic-inorganic composite hydrogel, the organic-inorganic composite hydrogel undergoes a phase transition and separates into a phase of agglomeration of polymer chains including the water-soluble organic monomer structural units constituting the organic-inorganic composite hydrogel and a phase of the aqueous solvent contained in the organic-inorganic composite hydrogel. Thus, it is particularly preferable that the polymer chain constituting the organic-inorganic composite hydrogel has no lower critical solution temperature in the aqueous solvent. Therefore, a water-soluble organic monomer that can form a highly hydrophilic polymer chain is preferred.

When the polymer chain constituting the organic-inorganic composite hydrogel is constituted of two or more water-soluble organic monomers, a copolymer formed from the two or more water-soluble organic monomers preferably has a lower critical solution temperature (°C) of 50°C or higher, more preferably 60°C or higher, from the viewpoint of reducing decrease in cushioning properties or liquid leakage due to phase transition, and preferably has no lower critical solution temperature (°C), that is, no lower critical solution temperature (°C) can be observed in the aqueous solvent.

Among the above water-soluble organic monomers, it is preferable to use the monomer having a (meth)acrylamide group from the viewpoint of solubility and the cushioning properties of the resulting organic-inorganic composite hydrogel. It is more preferable to use acrylamide, N,N-dimethylacrylamide, and acryloyl morpholine, and it is even more preferable to use N,N-dimethylacrylamide and acryloylmorpholine. It is particularly preferable to use N,N-dimethylacrylamide from the viewpoint that polymerization proceeds easily.

The water-soluble organic monomers may be used alone or in combination of two or more.

### <Water-Swellable Clay Mineral>

The water-swellable clay mineral used in the present embodiment forms a three-dimensional network structure together with the polymer chain having the water-soluble organic monomer structural unit (polymer having the water-soluble organic monomer structural unit) and serves as a constituent of the organic-inorganic composite hydrogel and the organic-inorganic composite hydrogel body.

The water-swellable clay mineral used in the present embodiment is not particularly limited and examples include water-swellable smectite and water-swellable mica. Examples of the water-swellable smectite include water-swellable hectorite, water-swellable montmorillonite, and water-swellable saponite. Examples of the water-swellable mica include water-swellable synthetic mica.

Among these, it is preferable to use water-swellable hectorite and water-swellable montmorillonite from the viewpoint of dispersibility, and it is more preferable to use water-swellable hectorite.

The water-swellable clay mineral used in the present embodiment can be naturally derived, synthesized, and surface-modified. Examples of the surface-modified water-swellable clay mineral include phosphonic acid-modified hectorite and fluorine-modified hectorite. Phosphonic acid-modified hectorite is preferred from the viewpoint of heat absorption properties and cushioning properties of the resulting organic-inorganic composite hydrogel.

The water-swellable clay minerals listed above may be used alone or in combination of two or more.

The phosphonic acid-modified hectorite forms a three-dimensional network structure together with the polymer of the water-soluble organic monomer and serves as a constituent of the organic-inorganic composite hydrogel. Examples of the phosphonic acid-modified hectorite that can be used include pyrophosphoric acid-modified hectorite, etidronic acid-modified hectorite, alendronic acid-modified hectorite, methylenediphosphonic acid-modified hectorite, and phytic acid-modified hectorite. These phosphonic acid-modified hectorites may be used alone or in combination of two or more.

The content of the water-swellable clay mineral in the present embodiment is preferably 50% by mass or less of the total amount of the polymer derived from the water-soluble organic monomer, the water-swellable clay mineral, the polymerization initiator, and the aqueous solvent in the organic-inorganic composite hydrogel, more preferably 30% by mass or less, even more preferably 20% by mass or less, and particularly preferably 10% by mass or less. The lower limit of the content of the water-swellable clay mineral is preferably 0.1% by mass or more, more preferably 1% by mass or more, even more preferably 2% by mass or more, and particularly preferably 3% by mass or more.

The upper and lower limits of the content of the water-swellable clay mineral in the organic-inorganic composite hydrogel can be combined as appropriate (for example, the preferred range of the content can be 0.1% by mass to 50% by mass, 1% by mass to 30% by mass, 2% by mass to 20% by mass, or 3% by mass to 10% by mass).

### <Reaction Material>

In one aspect of the present embodiment, the heat absorber contains a bag and an organic-inorganic composite hydrogel as the content of the bag. The organic-inorganic composite hydrogel according to one aspect of the present embodiment is made from at least a water-swellable clay mineral and a water-soluble organic monomer as reaction materials. In this case, the organic-inorganic composite hydrogel may be filled in the form of a gel body into the bag and then the bag may be sealed. Alternatively, the water-soluble organic monomer and the water-swellable clay mineral, which are the reaction materials of the organic-inorganic composite hydrogel, may be filled in the bag together with an aqueous solvent (an organic solvent and a polymerization initiator may be blended if necessary), and the water-soluble organic monomer and the water-swellable clay mineral may be gelated inside the bag in a sealed state.

A preferred method of producing the organic-inorganic composite hydrogel according to one aspect of the present embodiment is to polymerize the water-soluble organic monomer in a dispersion liquid (a) containing the water-soluble organic monomer and the water-swellable clay mineral, which are reaction materials, a polymerization initiator, and an aqueous solvent, because this method is a simple and convenient method to obtain an organic-inorganic composite hydrogel.

The content of the water-soluble organic monomer in the dispersion liquid (a) is, for example, in the range of 0.90 by mass to 50% by mass of the total amount (mass) of the water-soluble organic monomer, the water-swellable clay mineral, and the aqueous solvent. The lower limit of the content of the water-soluble organic monomer is preferably 0.9% by mass or more, more preferably 1% by mass or more, and even more preferably 5% by mass or more. The upper limit of the content of the water-soluble organic monomer is preferably 50% by mass or less and more preferably 30% by mass or less. The above upper and lower limits of the content can be combined as appropriate. It is preferable if the content of the water-soluble organic monomer is 0.9% by mass or more, because a hydrogel with excellent mechanical properties can be obtained. On the other hand, it is preferable if the content of the water-soluble organic monomer is 50% by mass or less, because the dispersion liquid can be easily prepared.

The content of the water-swellable clay mineral in the dispersion liquid (a) is, for example, in the range of 0.1% by mass to 50% by mass of the total amount (mass) of the water-soluble organic monomer, the water-swellable clay mineral, and the aqueous solvent. The lower limit of the content of the water-swellable clay mineral is preferably 0.1% by mass or more, more preferably 1% by mass or more, and even more preferably 3% by mass or more. The upper limit of the content of the water-swellable clay mineral is preferably 50% by mass or less, more preferably 30% by mass or less, and even more preferably 10% by mass or less. The above upper and lower limits of the content can be combined as appropriate (for example, the preferred range of the content can be 1% by mass to 30% by mass, or 3% by mass to 10% by mass). It is preferable if the content of the water-swellable clay mineral is 0.1% by mass or more, because the mechanical properties of the resulting hydrogel are more improved. On the other hand, it is preferable if the content of the water-swellable clay mineral is 50% by mass or less, because the viscosity increase of the dispersion liquid (a) can be more suppressed. Although the dispersion liquid (a) has more excellent storage stability when phosphonic acid-modified hectorite is used as a water-swellable clay mineral, the dispersion liquid (a) may contain other water-swellable clay minerals to the extent that storage stability is not impaired.

The content of the aqueous solvent in the dispersion liquid (a) is, for example, in the range of 50% by mass to 99% by mass of the total amount (mass) of the water-soluble organic monomer, the water-swellable clay mineral, and the aqueous solvent. The lower limit of the content of the aqueous solvent is preferably 50% by mass or more and more preferably 60% by mass or more. The upper limit of the content of the aqueous solvent is preferably 99% by mass or less and more preferably 90% by mass or less. The above upper and lower limits of the content can be combined as appropriate (for example, the preferred range of the content can be 50% by mass to 90% by mass, or 60% by mass to 90% by mass). It is preferable if the content of the aqueous solvent is 90% by mass or less, because a hydrogel with excellent mechanical properties can be obtained. On the other hand, it is preferable if the content of the aqueous solvent is 60% by mass or more, because a dispersion liquid (a) in which each component is uniformly dispersed can be easily prepared.

In the dispersion liquid (a), in addition to the water-soluble organic monomer and the water-swellable clay mineral which are reaction materials, the polymerization initiator, and the aqueous solvent, one or two or more selected from the group consisting of low-volatile solvents and additives as described later may be mixed.

The dispersion liquid (a) in the present embodiment preferably contains a polymerization initiator. The polymerization initiator is not particularly limited and examples include a water-soluble peroxide and a water-soluble azo compound.

Examples of the water-soluble peroxide include potassium peroxodisulfate, ammonium peroxodisulfate, sodium peroxodisulfate, and t-butyl hydroperoxide.

Examples of the water-soluble azo compound include 2,2'-azobis(2-methylpropionamidine) dihydrochloride and 4,4'-azobis(4-cyanovaleric acid).

Among these, from the viewpoint of interaction with the water-swellable clay mineral, it is preferable to use the water-soluble peroxide. It is more preferable to use potassium peroxodisulfate, ammonium peroxodisulfate, and sodium peroxodisulfate. It is even more preferable to use sodium peroxodisulfate and ammonium peroxodisulfate.

The polymerization initiators listed above may be used alone or in combination of two or more.

In one aspect of the present embodiment, the polymerization initiator is not essential, but when used, the molar ratio of the polymerization initiator to the water-soluble organic monomer in the dispersion liquid (a) (polymerization initiator/water-soluble organic monomer) is preferably 0.01 or more, more preferably 0.02 to 0.1, and even more preferably 0.04 to 0.1.

The polymerization initiator is not essential, but when used, the content of the polymerization initiator in the dispersion liquid (a) is preferably 0.1% by mass to 10% by mass of the total amount (mass) of the water-soluble organic monomer, the water-swellable clay mineral, the aqueous solvent, and the polymerization initiator, and more preferably 0.2% by mass to 5% by mass. It is preferable if the content of the polymerization initiator is 0.1% by mass or more, because the water-soluble organic monomer can be polymerized even under an air atmosphere. On the other hand, it is preferable if the content of the polymerization initiator is 10% by mass or less as described above, because the dispersion liquid can be used without agglomerating before polymerization, which improves the ease of handling.

The dispersion liquid (a) contains the water-soluble organic monomer, the water-swellable clay mineral, and the aqueous solvent, and may further contain an organic solvent, a catalyst, an organic crosslinking agent, a preservative, a thickening agent, or the like, if necessary.

Examples of the organic solvent include alcohol compounds such as methanol, ethanol, propanol, isopropyl alcohol, and 1-butanol; ether compounds such as ethyl ether and ethylene glycol monoethyl ether; amide compounds such as dimethylformamide and N-methylpyrrolidone; and ketone compounds such as acetone and methyl ethyl ketone.

Among these, from the viewpoint of dispersibility of the water-swellable clay mineral, it is preferable to use alcohol compounds. It is more preferable to use methanol, ethanol, n-propyl alcohol, and isopropyl alcohol, and it is even more preferable to use methanol and ethanol.

These organic solvents may be used alone or in combination of two or more.

The catalyst has the function of increasing the polymerization rate when the water-soluble organic monomer is polymerized.

The catalyst is not particularly limited and examples include tertiary amine compounds, thiosulfates, and ascorbic acids.

Examples of the tertiary amine compounds include N,N,N',N'-tetramethylethylenediamine and 3-dimethylaminopropionitrile.

Examples of the thiosulfates include sodium thiosulfate and ammonium thiosulfate.

Examples of the ascorbic acids include L-ascorbic acid and sodium L-ascorbate.

Among these, it is preferable to use the tertiary amine compounds from the viewpoint of stability of the dispersion liquid, and it is more preferable to use N,N,N',N'-tetramethylethylenediamine.

The catalysts listed above may be used alone or in combination of two or more.

The catalyst is not essential, but when the catalyst is used, the content of the catalyst in the dispersion liquid (a) is preferably 0.01% by mass to 1% by mass of the total amount (mass) of the water-soluble organic monomer, the water-swellable clay mineral, the aqueous solvent, and the catalyst, and more preferably 0.05% by mass to 0.5% by mass. It is preferable if the content of the catalyst is 0.01% by mass or more, because the synthesis of the hydrogel obtained from the water-soluble organic monomer can be efficiently promoted. On the other hand, it is preferable if the content of the catalyst is 1% by mass or less, because the dispersion liquid can be used without agglomerating before polymerization, which improves the ease of handling.

The dispersion liquid (a) is prepared, for example, by a method in which the water-soluble organic monomer, the water-swellable clay mineral, the polymerization initiator, and the aqueous solvent such as water are mixed in a batch; or a multiple-liquid mixing method in which a dispersion liquid (a1) containing the water-soluble organic monomer and a solution (a2) containing the polymerization initiator are prepared as separate dispersion liquid or solution and mixed immediately before use. The multiple-liquid mixing method is preferred from the viewpoint of dispersibility, storage stability, viscosity control, and the like.

Examples of the dispersion liquid (a1) containing the water-soluble organic monomer include a dispersion liquid in which the water-soluble organic monomer and the water-swellable clay mineral are mixed.

Examples of the solution (a2) containing the polymerization initiator include an aqueous solution in which the polymerization initiator and water are mixed.

The organic-inorganic composite hydrogel is obtained by polymerizing the water-soluble organic monomer in the dispersion liquid (a). The polymerization method is not particularly limited and the polymerization can be performed by a known method. Specifically, examples of the polymerization method include radical polymerization by heating or UV irradiation, and radical polymerization using redox reaction.

The polymerization temperature for polymerization of the organic-inorganic composite hydrogel is preferably 10°C to 80°C and more preferably 20°C to 80°C. It is preferable if the polymerization temperature is 10°C or higher, because the radical reaction can proceed in a chain reaction manner. On the other hand, it is preferable if the polymerization temperature is 80°C or lower, because polymerization can be performed without boiling water contained in the dispersion liquid (a).

The polymerization time of the organic-inorganic composite hydrogel varies with the type of polymerization initiator and catalyst, and the polymerization is carried out for a few tens of seconds to 24 hours. In particular, in a case of radical polymerization using heating or redox, 1 to 24 hours is preferred, and 5 to 24 hours is more preferred. It is preferable if the polymerization time is 1 hour or longer, because the polymer of the water-swellable clay mineral and the water-soluble organic monomer can form a three-dimensional network structure. On the other hand, it is preferable that the polymerization time is 24 hours or shorter, because the polymerization reaction is almost completed within 24 hours.

### (Aqueous Solvent)

The heat absorber in the present embodiment contains an aqueous solvent as its content. It is preferable that the aqueous solvent is mainly present in the hydrogel, for example, the organic-inorganic composite hydrogel.

The aqueous solvent in the present embodiment contains water as a main component and means water or a solvent containing water as a main component. Therefore, the aqueous solvent encompasses a solvent mixture of a solvent other than water or an aqueous solution containing a salt (for example, buffer solution, electrolyte solution). In the present description, "containing water as a main component" means that water is contained in 45% by mass or more of the total aqueous solvent. As the water, purified water, pure water, ultrapure water, or distilled water can be used without any particular limitation.

Examples of the salt include alkali metal halides such as sodium chloride or potassium chloride; alkaline earth metal halides such as magnesium chloride or calcium chloride; and salts having buffering capacity such as Tris-HCl, glycine hydrochloride, citric acid-sodium citrate, acetic acid-sodium acetate, citric acid-disodium hydrogen phosphate, sodium dihydrogen phosphate-disodium hydrogen phosphate, glycine-sodium hydroxide, and sodium carbonate-sodium hydrogen carbonate. Good buffers such as HEPES or MOPS may be used as the aqueous solvent.

Examples of the solvent other than water that constitutes the solvent mixture include organic solvents that can be homogeneously mixed with water (for example, lower alcohols, lower ketones, etc.).

The upper limit of the water content in the aqueous solvent in the present embodiment is preferably 100% by mass or less of the total aqueous solvent, more preferably 99% by mass or less, even more preferably 90% by mass or less, and particularly preferably 80% by mass or less. The lower limit of the water content is preferably 5% by mass or more, more preferably 10% by mass or more, even more preferably 20% by mass or more, and particularly preferably 45% by mass or more.

The preferred range of the water content in the aqueous solvent can be a combination of the above upper and lower limits as appropriate (for example, the preferred range of the content can be 5% by mass to 100% by mass, 10% by mass to 99% by mass, 20% by mass to 90% by mass, or 45% by mass to 80% by mass).

### (Low-Volatile Solvent)

In the present embodiment, a low-volatile solvent can be used as an optional component in order to balance heat absorption performance and cushioning properties. In particular, the addition of a low-volatile solvent to the content of the heat absorber can maintain high cushioning properties over a wide temperature range.

The low-volatile solvent in the present embodiment is preferably an organic solvent with a volatility of 0.1 g or less per 1 cm²·1 hour in an open system at 60°C and 1 atm (0.1 g or less/cm²·hr·60°C·1 atm), and more preferably an organic solvent with a volatility of 0.05 g or less, and even more preferably an organic solvent with a volatility of 0.01 g or less. Specifically, since a solvent miscible with water is preferred, polyhydric alcohols such as glycerin (0.001 g or less/cm²·hr·60°C·1 atm), diglycerin (0.001 g or less/cm²·hr·60°C·1 atm), ethylene glycol (0.01 g or less/cm²·hr·60°C·1 atm), propylene glycol (0.001 g or less/cm²·hr·60°C·1 atm), and polyethylene glycol (0.001 g or less/cm²·hr·60°C·1 atm) are preferred. Glycerin and diglycerin are more preferred. These low-volatile solvents may be used alone or in combination of two or more. It is preferable that these low-volatile solvents are uniformly contained in the organic-inorganic composite hydrogel.

The low-volatile solvent, especially polyhydric alcohol, contained as the content of the heat absorber in the present embodiment suppresses or prevents volatilization of the aqueous solvent or suppresses decrease in cushioning properties at low temperatures (improves the effect of antifreezing properties).

When the low-volatile solvent is used as an optional component, the mass ratio of the aqueous solvent to the low-volatile solvent (aqueous solvent/low-volatile solvent) in the content of the heat absorber in the present embodiment is preferably 60/40 to 20/80, more preferably 50/50 to 30/70, in order to obtain an organic-inorganic composite hydrogel with excellent heat absorption performance and various properties such as cushioning properties in a wide temperature range.

### (Additive)

The content or the dispersion liquid (a) of the heat absorber in the present embodiment can also contain various additives such as UV absorber, antioxidant, organic solvent, inorganic filler other than the water-swellable clay mineral, viscosity adjusters such as a thickening agent, a crosslinking agent, and a flame retardant, if necessary. The various additives are optional components, but when they are used, it is preferable that they are used in proportions that do not impair the effects of the present invention and that are appropriate for the purpose of each additive. Although the proportion cannot be determined in general, the content of the various additives is preferably 0% by mass or more and more preferably 10% by mass or more of the total amount (mass) of the hydrogel and the various additives used in the present disclosure. The content of the additives is preferably 50% by mass or less and more preferably 40% by mass or less.

Examples of the UV absorber include triazine derivatives such as 2-[4-{(2-hydroxy-3-dodecyloxypropyl)oxy}-2-hydroxyphenyl]-4,6-bis(2,4-dimethylphenyl)-1,3,5-triazine, and 2-[4-{(2-hydroxy-3-tridecyloxypropyl)oxy}-2-hydroxyphenyl]-4,6-bis(2,4-dimethylphenyl)-1,3,5-triazine, 2-(2'-xanthene carboxy-5'-methylphenyl)benzotriazole, 2-(2'-o-nitrobenzyloxy-5'-methylphenyl)benzotriazole, 2-xanthene carboxy-4-dodecyloxybenzophenone, and 2-o-nitrobenzyloxy-4-dodecyloxybenzophenone. These UV absorbers can be used alone or in combination of two or more.

Examples of the antioxidant include "SUMILIZER BBM-S" and "SUMILIZER GA-80" manufactured by Sumitomo Chemical Co., Ltd.

Examples of the organic solvent include aromatic hydrocarbons such as toluene and xylene; glycols such as ethylene glycol and propylene glycol; polyether glycols, which are polymers of glycols; cellosolves; carbitols; and aliphatic alcohols such as methanol. The organic solvents can be used alone or in combination of two or more.

Examples of the inorganic filler include fused silica, crystalline silica, alumina, silicon nitride, and aluminum hydroxide.

Examples of the viscosity adjuster such as thickening agent include various tackifier resins of rosin-based, polymerized rosin-based, polymerized rosin ester-based, rosin phenol-based, stabilized rosin ester-based, disproportionated rosin ester-based, terpene-based, terpene phenolic resin-based, and petroleum resin-based.

Examples of the crosslinking agent include known crosslinking agents of isocyanate-based, epoxy-based, aziridine-based, polyvalent metal salt-based, metal chelate-based, keto-hydrazide-based, oxazoline-based, carbodiimide-based, silane-based, and glycidyl(alkoxy)epoxysilane-based.

Examples of the flame retardant include inorganic phosphorus compounds such as red phosphorus, ammonium phosphates such as ammonium phosphate monobasic, diammonium phosphate, triammonium phosphate, and ammonium polyphosphate, and amide phosphate; organophosphorous compounds such as phosphate ester compounds, phosphonic acid compounds, phosphinic acid compounds, phosphine oxide compounds, phosphorane compounds, and organic nitrogen-containing phosphorus compounds, cyclic organophosphorus compounds such as 9,10-dihydro-9-oxa-10-phosphaphenanthrene-10-oxide, 10-(2,5-dihydroxyphenyl)-10H-9-oxa-10-phosphaphenanthrene-10-oxide, and 10-(2,7-dihydroxynaphthyl)-10H-9-oxa-10-phosphaphenanthrene-10-oxide, and derivatives thereof reacted with compounds such as epoxy resin and phenol resin; nitrogen-containing flame retardants such as triazine compounds, cyanuric acid compounds, isocyanuric acid compounds, and phenothiazine; silicone-based flame retardants such as silicone oil, silicone rubber, and silicone resin; inorganic flame retardants such as metal hydroxides, metal oxides, metal carbonate compounds, metal powders, boron compounds, and low-melting point glass. These flame retardants can be used alone or in combination of two or more. When these flame retardants are used, they are used in the range of 0.1% by mass to 20% by mass of the total content of the heat absorber or the total dispersion liquid (a).

### <Production Method of Heat Absorber>

In one aspect of the present embodiment, as described above, a method of producing the heat absorber includes the steps of: preparing a dispersion liquid (a) containing a water-soluble organic monomer and a water-swellable clay mineral as reaction materials, an aqueous solvent, and a polymerization initiator, a catalyst, a low-volatile solvent and/or additives to be blended if necessary; filling the dispersion liquid (a) through the opening of a bag and then sealing the bag; and gelating the water-soluble organic monomer in the bag at a desired polymerization temperature.

In one aspect of the present embodiment, another method of producing the heat absorber includes the steps of: preparing a mixed solution in which a water-soluble organic monomer and a water-swellable clay mineral as reaction materials, a polymerization initiator, and an aqueous solvent or an organic solvent are mixed; preparing an organic-inorganic composite hydrogel body by gelating the mixed solution by heating; allowing the organic-inorganic composite hydrogel to swell in the aqueous solvent by immersing the organic-inorganic composite hydrogel body in the aqueous solvent for a desired time; and filling the swollen organic-inorganic composite hydrogel through the opening of a bag and then sealing the bag.

In the method of producing the heat absorber in the present embodiment, even when a heat-absorbing agent is blended in the content of the heat absorber, the heat absorber can be molded at a molding temperature of 120°C by the method described above.

### (Applications of Heat Absorber)

The heat absorber in the present embodiment can be used for battery applications, especially for secondary battery applications, because it can exhibit a heat absorption effect to such a level that can effectively prevent ignition and damage of secondary batteries due to thermal runaway as described above. The applications of the heat absorber in the present embodiment are not limited to battery applications and can be used in general applications that require fire spread prevention. For example, the heat absorber in the present embodiment can be used with building materials such as ceilings, walls, and kitchen area members.

### [Secondary Battery Module]

The kind of secondary battery in which the heat absorber in the present embodiment can be installed is not particularly limited, and examples thereof include lithium-ion batteries, lithium-ion polymer batteries, lead storage batteries, nickel-hydrogen storage batteries, nickel-cadmium storage batteries, nickel-iron storage batteries, nickel-zinc storage batteries, silver oxide-zinc storage batteries, metal air batteries, polyvalent cation batteries, and capacitors. Among those, the suitable application targets are lithium-ion batteries. The heat absorber in the present embodiment is also suitably used for a solid-state battery as the secondary battery. Since the solid-state battery, like a lithium-ion battery, may also ignite or break due to thermal runaway or expand and contract due to charging and discharging, the effect of the installation of the heat absorber in the present embodiment can be achieved.

A secondary battery module in which the heat absorber in the present embodiment can be installed is a secondary battery to be installed, for example, in a vehicle or an air vehicle such as drone, and has a plurality of battery cells and a case for storing such a plurality of battery cells.

The battery cell that constitutes the secondary battery module (hereinafter also referred to as battery cell) may be, for example, a battery cell in which a battery exterior film is used as an exterior material, and in the exterior material, a battery element including at least a positive electrode material layer, a negative electrode material layer, a separator, a positive electrode collector, a negative electrode collector and the like is enclosed.

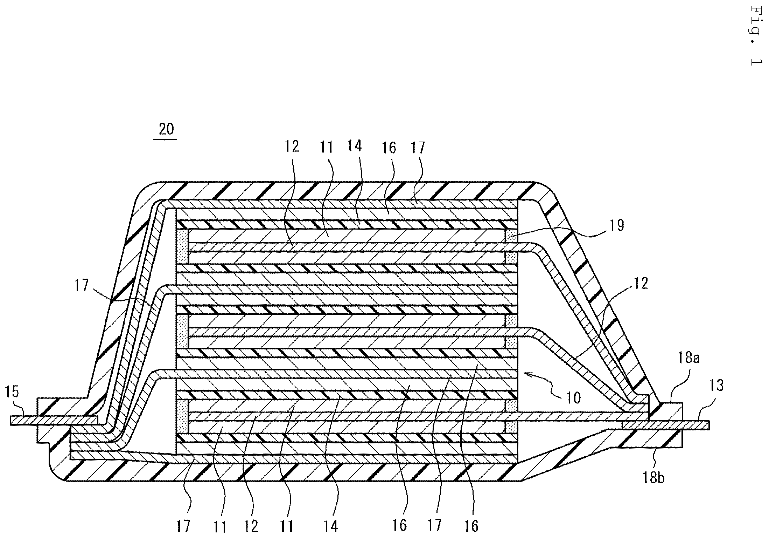

In the following, referring to FIG. 1, a secondary battery module in which the heat absorber in the present embodiment can be installed will be described. FIG. 1 is a cross-sectional view of a stacked battery 20 as an example of the secondary battery. The secondary battery in which the heat absorber in the present embodiment can be installed is not limited to the stacked battery 20 having a flat shape as illustrated in FIG. 1. The secondary battery in which the heat absorber in the present embodiment can be installed may have a cylindrical shape, such as a wound secondary battery, or a cylindrical secondary battery may be deformed to a rectangular flat shape.

In the present embodiment, the stacked battery 20 has a structure in which an approximately rectangular flat battery element 10, in which charging and discharging reactions substantially proceed, is sealed inside battery exterior materials 18a and 18b. The battery element 10 has a configuration in which a positive electrode, an electrolyte layer (or separator) 14, and a negative electrode are stacked. The positive electrode has a structure in which a positive electrode material layer 11 containing a positive electrode active material is disposed on both sides of a positive electrode collector 12. The negative electrode has a structure in which a negative electrode material layer 16 containing a negative electrode active material is disposed on both sides of a negative electrode collector 17. One positive electrode material layer 11 and the negative electrode material layer 16 adjacent to the positive electrode material layer 11 are disposed to face each other with the electrolyte layer 14 interposed therebetween, and the positive electrode, the electrolyte layer 14, and the negative electrode are sequentially stacked. In this way, the positive electrode, the electrolyte layer 14, and the negative electrode adjacent to each other form one unit cell. The stacked battery 20 illustrated in FIG. 1 has a configuration in which a plurality of such unit cells are stacked and electrically connected in parallel. In addition, an activated carbon layer 19 is disposed to adsorb a component derived from the positive electrode active material due to melting or sublimation of the positive electrode active material when the battery is exposed to high temperatures.

As illustrated in FIG. 1, the positive electrode collector 12 and the negative electrode collector 17 have a structure in which they lead to the outside of the battery exterior materials 18a and 18b such that a positive electrode terminal 13 and a negative electrode terminal 15 to be electrically connected to the positive electrode and the negative electrode are attached and sandwiched between the ends of the battery exterior materials 18a and 18b. The positive electrode terminal 13 and the negative electrode terminal 15 can be respectively attached to the positive electrode collector 12 and the negative electrode collector 17 of the respective electrodes by welding or the like via a positive electrode lead and a negative electrode lead (not illustrated in the drawing) if necessary.

Laminated films are used for the battery exterior materials 18a and 18b. Usually, sealant layers formed on the surfaces of the battery exterior films 18a and 18b are heat-sealed to each other. In addition, the periphery of the battery exterior materials 18a and 18b has a region in which the sealant layers adhere to each other by heat sealing.

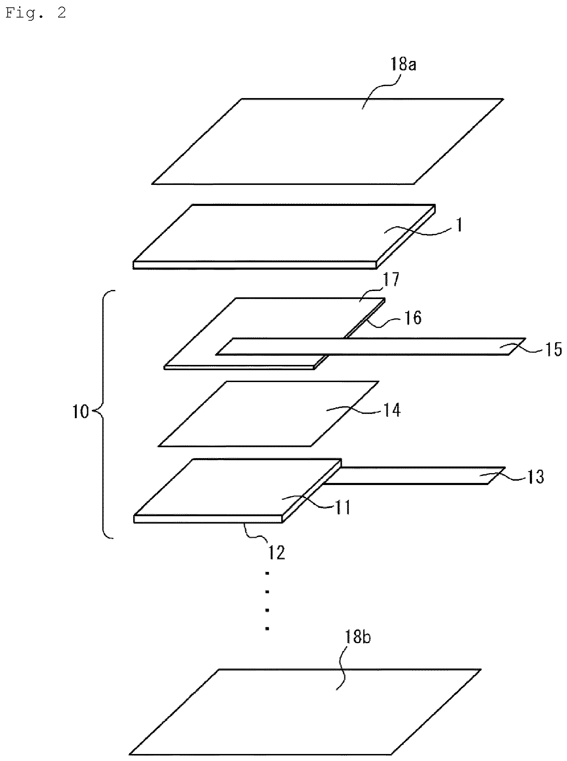

Referring now to FIG. 2, a secondary battery module in which the heat absorber in the present embodiment is installed will be described. FIG. 2 is a perspective view schematically illustrating a disassembled state of the secondary battery module in FIG. 1. The battery element 10 illustrated in FIG. 2 has a configuration in which the positive electrode formed on the positive electrode collector 12 (such as aluminum foil) having the positive electrode terminal 13 and the negative electrode disposed on the negative electrode collector 17 (such as metal foil) having the negative electrode terminal 15 are superimposed to face each other with the separator 14 containing an electrolyte interposed therebetween. A plurality of battery elements 10 are stacked and sealed with the battery exterior materials 18a and 18b (for example, aluminum laminate exterior materials). The heat absorber 1 in the present embodiment is disposed in contact with the negative electrode collector 17. The heat absorber 1 may be disposed in contact with not only the negative electrode collector 17 but also the positive electrode collector 12. Thus, the secondary battery module with the heat absorber 1 installed on the battery element 10 can have one or two or more stacks in each of which the positive electrode formed on the positive electrode collector 12 (such as aluminum foil) having the positive electrode terminal 13, the separator 14 containing an electrolyte, and the negative electrode disposed on the negative electrode collector 17 (such as metal foil) having the negative electrode terminal 15 are sequentially stacked, and one or two or more heat absorbers 1 may be disposed in abutment with the positive electrode collector 12 and/or the negative electrode collector 17 but not in abutment with the separator 14.

When a solid electrolyte or a gel electrolyte is used as the electrolyte, such an electrolyte can be interposed between the electrodes instead of the separator 14. On the other hand, the hydrogel or the aqueous solvent, which is the content of the heat absorber in the present embodiment, is not in direct contact with the battery element 10. Therefore, a preferable heat absorber for secondary batteries in the present embodiment has a hydrogel and a bag filled with the hydrogel, but the content of the bag is not contained such that the hydrogel or the aqueous solvent is in direct contact with the battery element 10. More preferably, the battery element 10 is not contained as the content of the bag of the heat absorber for secondary batteries.

In the secondary battery module in the present disclosure, the heat absorber 1 in the present embodiment may be sandwiched between the battery elements 10 (or also referred to as battery cells) adjacent to each other that are housed in a plurality of cases (not illustrated) or a plurality of battery exterior films 18a and 18b. The case can be made of, for example, aluminum, iron, or a metal material including these, or a resin material such as polyphenylene sulfide, and when the case is made of a resin material, it can contribute to lightening of the secondary battery module.

The heat absorber 1 can be sandwiched between a plurality of battery elements 10, for example, by adhesion agents, fusion (ultrasonic fusion, high-frequency fusion, and thermal fusion), adhesive agents, or the like.

Such a configuration allows the heat absorber 1 sandwiched between the battery elements 10 to absorb the heat generated during the charging of the secondary battery, or the like, resulting in suppressing the rapid temperature rise of the battery elements 10, or the like, and preventing deterioration, ignition, or the like of the battery elements 10. In addition, since the heat absorber 1 has the hydrogel absorbing the aqueous solvent as the content, the heat absorber 1 sandwiched between the battery elements 10 can suppress the temperature effect between the battery elements 10 because of its thermal insulation properties, acts as a buffer material for a volume change due to expansion of the battery elements 10 because of the cushioning properties of the swollen hydrogel, and easily mitigates the internal pressure rise of the secondary battery module.

### Examples

Hereinafter, the present invention will be specifically described with reference to Examples and Comparative Examples. However, the present invention is not limited to the following Examples.

### (1) Evaluation Method

### [Measurement of Heat Absorption Starting Temperature, Endothermic Peak Temperature and Heat Absorption Amount]

The heat absorption starting temperature and the endothermic peak temperature of hydrogels produced in Examples were measured as follows.

The temperature was increased from 20°C to 350°C at 1°C/min under a nitrogen atmosphere using a differential scanning calorimetry analyzer (DSC; DSC-7020, manufactured by Hitachi High-Tech Corporation), and at this time, the temperature at the intersection of a straight line extending a low temperature-side baseline to the high temperature side in the DSC measurement curve and a tangent line drawn at the point of maximum gradient on the curve at the low temperature side of the endothermic peak due to evaporation was adopted as a heat absorption starting temperature (°C), and the point of maximum difference from the baseline of the DSC measurement curve was adopted as an endothermic peak temperature (°C). In addition, the value in which the integral value of the endothermic peak on the basis of the baseline of the DSC measurement curve was divided by the mass of the heat-absorbing agent used in the measurement was adopted as a heat absorption amount (J/g or mJ/mg).

### [Evaluation of Cushioning Properties]

Hydrogels were removed from heat absorbers (1) and (2) prepared in Examples and each evaluated for cushioning properties as follows.

Specifically, at room temperature (23°C), hydrogels were each cut into 10 cm in length × 10 cm in width × 1 cm in height and placed on a tabletop precision universal testing machine ("Autograph AGS-X" manufactured by Shimadzu Corporation) with a 5 mm-diameter indentation jig, and an indentation test was conducted. In the indentation test, the surface recovery was observed after 5 minutes of indentation at 1 MPa for 60 seconds and evaluated according to the following criteria.

| | |
|---|---|
| Return 90% or more of original height | A |
| Return 80% or more of original height | B |
| Return 70% or more of original height | C |
| Return less than 70% of original height | D |

### [Evaluation of Flame Retardancy]

Each of the dispersion liquids used in Examples was injected into a 1 mm-thick container and polymerization was performed at 20°C to obtain a 1 mm-thick sheet-shaped organic-inorganic composite hydrogel. The sheet was cut to 125 mm × 13 mm and measured according to the 20 mm vertical flame test (IEC 60695-11-10B, ASTM D38 01) of the UL94 flammability test to evaluate flame retardancy.

Flame retardancy of V-1 is acceptable in practical use. Flame retardancy is preferably V-0.
Good: UL94 Standard V-0
Pass: UL94 Standard V-1
Fail: UL94 Standard less than V-1

### [Evaluation of Freezing Resistance]

The heat absorbers (1) and (2) prepared in Examples were put in a freezer at -20°C and left for 24 hours, and then the above [Evaluation of Cushioning Properties] was performed to evaluate the freezing resistance.

### (2) Examples and Comparative Examples

### (Example 1)

In 100 parts by mass of pure water, 20 parts by mass of N,N-dimethylacrylamide (hereinafter referred to as "DMAA"), 4.8 parts by mass of water-swellable synthetic hectorite ("LAPONITE RD" from BYK Japan KK), 0.5 parts by mass of sodium peroxodisulfate (hereinafter referred to as "NPS"), and 0.8 parts by mass of N,N,N',N'-tetramethylethylenediamine (hereinafter referred to as "TEMED") were mixed and stirred to obtain a homogeneous dispersion liquid (a-1) (see Table 1).

The dispersion liquid (a-1) was then injected to fill a bag-shaped container made of an aluminum pouch ("Gas barrier bag" manufactured by MITSUBISHI GAS CHEMICAL COMPANY, INC., 100 mm in length × 300 mm in width × 0.094 mm in thickness, laminate of PET, aluminum foil, and polyethylene), and the inlet was closed by heat sealing. The aluminum pouch was placed flat between 1 cm-thick gap materials, on which a flat plate was placed. The aluminum pouch was allowed to stand at 20°C for 15 hours to produce a 1 cm-thick sheet-shaped heat absorber (1). Then, evaluation was performed on the resulting heat absorber (1) according to the procedures described in the above [Evaluation of Cushioning Properties] and [Evaluation of Flame Retardancy]. The results are listed in Table 1.

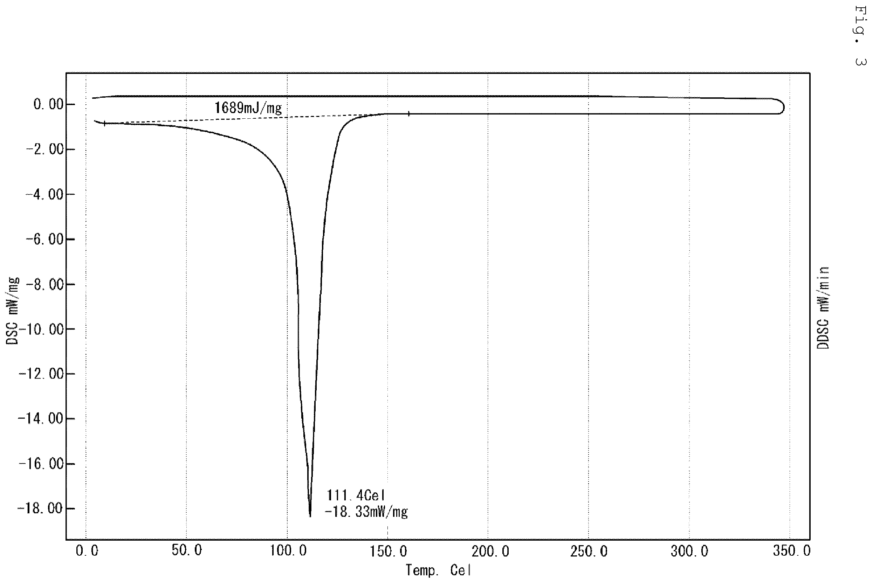

The swollen organic-inorganic composite hydrogel contained in the heat absorber (1) of Example 1 was taken out and evaluated for endothermic peak temperature and heat absorption amount under the above DSC measurement conditions. The DSC curve is shown in FIG. 3.

### (Example 2)

In 100 parts by mass of a mixed solution of 80 parts by mass of pure water and 20 parts by mass of glycerin, 20 parts by mass of DMAA, 4.8 parts by mass of water-swellable synthetic hectorite ("LAPONITE RDS" from BYK Japan KK), 0.5 parts by mass of NPS, and 0.8 parts by mass of TEMED were mixed and stirred to obtain a homogeneous dispersion liquid (a-2). Then, a sheet-shaped heat absorber (2) was prepared by the same method as in Example 1 above (see Table 1). Then, evaluation was performed on the resulting heat absorber (2) according to the procedures described in the above [Evaluation of Cushioning Properties] and [Evaluation of Flame Retardancy]. The results are listed in Table 1.

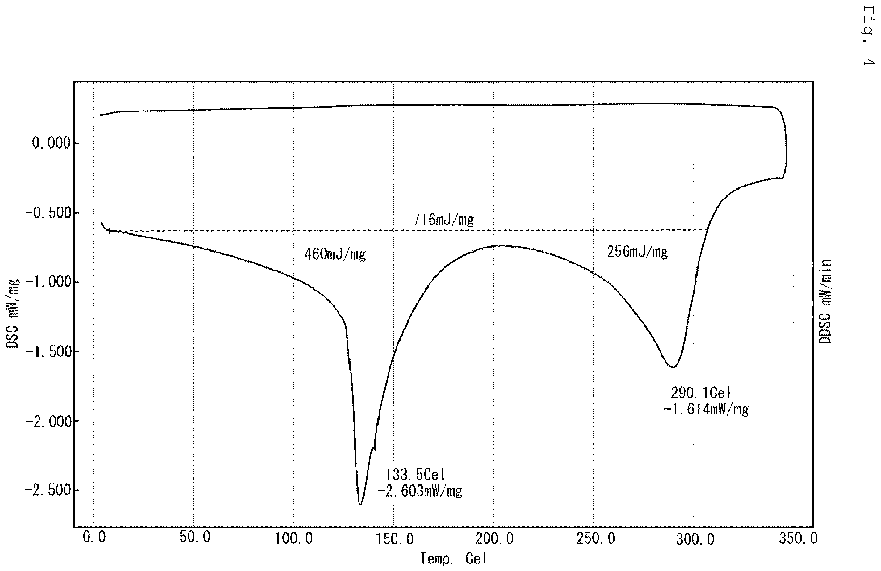

The swollen organic-inorganic composite hydrogel contained in the heat absorber (2) of Example 2 was taken out and evaluated for endothermic peak temperature and heat absorption amount under the above DSC measurement conditions. The DSC curve is shown in FIG. 4.

**[Table 1]**

| Table 1 | | | Example 1 | Example 2 |
|---|---|---|---|---|
| Type of Heat Absorber used | | | Heat Absorber (1) | Heat Absorber (2) |
| Composition (parts by mass) | Aqueous solvent | Pure water | 100 | 80 |
| | Water-soluble organic monomer | N,N-Dimethylacrylamide | 20 | 20 |
| | Water-swellable clay mineral | Water-swellable synthetic hectorite | 4.8 | 4.8 |
| | Salt | Tetramethylethylenediamine | 0.8 | 0.8 |
| | Polymerization initiator | Sodium peroxodisulfate | 0.5 | 0.5 |
| | Low-volatile solvent | Glycerin | - | 20 |
| Evaluation result | Cushioning properties | | A | A |
| | Heat absorption starting temperature (°C) | | around 100°C | around 125°C |
| | Endothermic peak temperature (°C) | | 111.4°C | 133.5°C |
| | Heat absorption amount (J/g) | | 1689 | 460 |
| | Flame retardancy (UL94) | | V-0 | V-0 |

The DSC measurement curves for the heat absorbers of Examples 1 and 2 were found to drop from the start of measurement. From the DSC measurement curves, the heat absorption starting temperatures of the heat absorbers of Examples 1 and 2 were determined according to the method for measuring a heat absorption starting temperature described in the above [Measurement of Heat Absorption Starting Temperature, Endothermic Peak Temperature and Heat Absorption Amount]. The results were around 100°C for the heat absorber (1) of Example 1 and around 125°C for the heat absorber (2) of Example 2.

Therefore, it was confirmed that the heat absorbers of Examples 1 and 2 have low heat absorption starting temperature and endothermic peak temperature and exhibit excellent heat absorption amount, cushioning properties, and flame retardancy. The heat absorbers (1) and (2) of Examples 1 and 2 were put in a freezer at -20°C and left for 24 hours and then removed from the refrigerator to evaluate their cushioning properties. The cushioning properties of the heat absorber (1) of Example 1 decreased, but the cushioning properties of the heat absorber (2) of Example 2 were maintained. Therefore, the heat absorber (2) of Example 2 has excellent freezing resistance.

Without a bag to contain the hydrogel or the aqueous solvent in the present embodiment, the hydrogel or the aqueous solvent which is the content would dissipate and fail to provide a sufficient heat absorption effect, flame retardant effect, or cushioning properties when the battery temperature rises or over time. However, the heat absorber in the present embodiment prevents dissipation of the hydrogel because the filled content stays inside the bag, and provides a sufficient heat absorption effect, flame retardancy, and cushioning properties even when the battery temperature rises or over time.

### Reference Signs List

- 1: stack
- 10: battery element
- 11: positive electrode material layer
- 12: positive electrode collector
- 13: positive electrode terminal
- 14: electrolyte layer (or separator)
- 15: negative electrode terminal
- 16: negative electrode material layer
- 17: negative electrode collector
- 18a, 18b: battery exterior material
- 19: activated carbon layer
- 20: stacked battery

## Claims

1. A heat absorber comprising:
a bag configured to be filled with a content; and
a hydrogel to fill the bag as the content.

2. The heat absorber according to claim 1, wherein a sheet that forms the bag has a water vapor transmission rate ([g/(m²·24h)]) of 50 g/(m²·24h) or less.

3. The heat absorber according to claim 1 or 2, wherein the hydrogel is an organic-inorganic composite hydrogel.

4. The heat absorber according to any one of claims 1 to 3, wherein the hydrogel is made from at least a water-soluble organic monomer and a water-swellable clay mineral as reaction materials.

5. The heat absorber according to any one of claims 1 to 4, further comprising a low-volatile solvent as the content.

6. The heat absorber according to any one of claims 1 to 5, wherein the heat absorber is used for a secondary battery.

7. A secondary battery module comprising the heat absorber according to any one of claims 1 to 6.

8. The secondary battery module according to claim 7, wherein the heat absorber is sandwiched between battery cells.

9. The secondary battery module according to claim 7 or 8, wherein the heat absorber has a total thickness in a range of 100 to 50000 µm.
